# EUROPÄISCHE PATENTSCHRIFT

(11) **EP 2 905 437 B1**
(45) Veröffentlichungstag und Bekanntmachung des Hinweises auf die Patenterteilung: **01.02.2017**
(21) Anmeldenummer: 14188789.3
(22) Anmeldetag: 14.10.2014
(51) Int. Cl.: F01L 13/00, F01L 1/12, F16K 31/524, F16K 1/54

(54) **Übertragungsanordnung für einen mechanisch steuerbaren Ventiltrieb**
Transfer assembly for a mechanically controllable valve drive
Système de transmission pour une commande de soupape pouvant être commandée mécaniquement

(30) Priorität: 11.12.2013 DE 102013113815
(43) Veröffentlichungstag der Anmeldung: 12.08.2015
(73) Patentinhaber: Pierburg GmbH, 41460 Neuss (DE)
(72) Erfinder: Jelinek, Dieter, Dr., 41564 Kaarst (DE)
(74) Vertreter: Patentanwälte ter Smitten Eberlein Rütten Partnerschaftsgesellschaft

(56) Entgegenhaltungen:
- EP-A1- 1 724 447
- WO-A1-93/18284
- WO-A1-95/30081
- WO-A2-2011/156684
- DE-A1- 3 621 080
- DE-A1- 10 012 400
- US-A- 6 076 491
- US-A1- 2004 074 459
- US-A1- 2005 247 277
- US-A1- 2008 223 324
- US-B1- 6 966 291

## Beschreibung

Die Erfindung betrifft eine Übertragungsanordnung für einen mechanisch steuerbaren Ventiltrieb, die ein Übertragungsglied aufweist, das derart ausgeführt ist, dass es direkt oder indirekt über Koppelmittel mit zumindest einem Schlepphebel eines Gaswechselventils in Wirkverbindung steht und das im Zylinderkopf mittels Lagermittel beweglich gelagert ist, wobei das Übertragungsglied des Weiteren mit einer Nockenwelle und einer Ventilhubverstelleinrichtung in Wirkverbindung steht, derart, dass zumindest verschiedene Maximalhübe des Gaswechselventils einstellbar sind, wobei das Übertragungsglied als Koppelmittel ein Profilstangenelement mit einer Arbeitskurve aufweist, wobei das Übertragungsglied mit einem in Längsrichtung des Übertragungsgliedes verstellbaren Stößelelement in Wirkverbindung steht, wobei das Stößelelement durch mindestens ein Federelement (28) gegenüber der Nockenwelle vorgespannt ist und wobei das Stößelelement gewindegeführt ist. Des Weiteren betrifft die Erfindung einen mechanisch steuerbaren Ventiltrieb mit einer derartigen Übertragungsanordnung.

Derartige Übertragungsanordnungen bzw. mechanisch steuerbare Ventiltriebe sind aus dem Stand der Technik hinlänglich bekannt. So offenbart die EP 638706 A1 eine Ventiltriebanordnung, bei der zur Steuerung bzw. Regelung des Ventilhubes eine in einem Zylinderkopf drehbar gelagerte Exzenterwelle vorgesehen ist, die auf die Übertragungsanordnung derartig einwirkt, dass auf einfache Weise Ventilhübe zwischen 0 und maximal eingestellt werden können. Durch diese Maßnahme kann der Verbrennungsprozess gut dem jeweiligen Betriebszustand der Brennkraftmaschine angepasst werden. Darüber hinaus ist aus der DE 10 2004 003 327 A1 bekannt, bei einer Ventiltriebanordnung Verstellorgane vorzusehen, die unabhängig voneinander verstellt werden können mit dem Ziel, einzelne Zylinder für bestimmte Betriebszustände stillzulegen. Des Weiteren ist aus der EP 1 760 278 A2 ein Ventiltrieb bekannt, der ein Exzenterorgan besitzt, das verschiedene Kurvenläufe insbesondere für den Teilhub und den Vollhub aufweist.

Aus der DE 102 58 277 A1 ist darüber hinaus eine Übertragungsanordnung bekannt, deren Übertragungsglied mit der Nockenwelle in Wirkverbindung steht, und durch eine Ventilhubverstelleinrichtung, die in diesem Falle keine Exzenterwelle darstellt, verstellbar ist.

Alle dargestellten Ventiltriebe offenbaren eine Übertragungsanordnung, die einerseits mit einer Nockenwelle und andererseits mit einer Ventilhubverstelleinrichtung in Wirkverbindung stehen, um zumindest verschiedene Maximalhügel eines Gaswechselventils einzustellen. Unabhängig von der Anordnung der Übertragungsanordnung im Bezug auf die Nockenwelle und die Ventilhubverstelleinrichtung bedingt ein derartig ausgeführter Ventiltrieb in allen Fällen einen großen Bauraum, der im Motorraum nicht zur Verfügung steht. Darüber hinaus führt die kinematische Kopplung des Übertragungsgliedes mit der Nockenwelle, der Verstelleinrichtung und dem Gaswechselventil zu Verschleiß- und Reibungsverlusten. Zur Lösung dieser Probleme ist es aus der DE 100 12 400 A1 und der JP 2007-127090 A bekannt, die Ventilhubverstelleinrichtung in dem Übertragungsglied der Übertragungsanordnung zu integrieren. Die hier dargestellten Ausführungsformen benötigen jedoch immer noch einen großen Bauraum und/oder hohe Aktuatorkräfte zum Antrieb der Ventilhubverstelleinrichtung. Zudem sind sie kompliziert im Aufbau und es muss eine umfangreiche Anpassung des Zylinderkopfes vorgenommen werden.

Aufgabe der Erfindung ist es daher, eine Übertragungsanordnung bzw. einen mechanisch steuerbaren Ventiltrieb zu schaffen, die die oben genannten Nachteile auf einfache und kostengünstige Weise vermeiden bzw. minimieren.

Diese Aufgabe wird dadurch gelöst, dass das Stößelelement als Drehstößel ausgebildet ist, wobei das Übertragungsglied Stellorgan der Ventihubverstelleinrichtung mit einem Gehäuseteil für das Profilstangenelement ausgebildet ist, wobei das Stößelelement in dem Gehäuseteil des Stellorgans gewindegeführt ist.. Hierdurch bedingt eine derartige Übertragungsanordnung einen wesentlich geringeren Bauraum als die herkömmlichen Übertragungsanordnungen. Zudem können auf einfache Weise Kontaktpunkte mit außerhalb gelegenen Anordnungen verringert werden, wodurch Reibungsverluste minimiert werden können. Es bleibt an zu merken, dass der Begriff gewindegeführter Drehstößel auch ein Gewinde, dass sich lediglich in Form einer Rampe über 360° erstreckt, mit einschließt.

Als Lagermittel kann in vorteilhafter Weise ein Stützrollenorgan vorgesehen sein, das auf die der Arbeitskurve gegenüber gelegenen Seite des Profilstangenelementes angreift.

Es kann überdies vorteilhaft sein, wenn das Stellorgan als hydraulisches Stellorgan ausgebildet ist.

Die Aufgabe wird ebenfalls gelöst durch einen mechanisch steuerbaren Ventiltrieb mit einer derartigen Übertragungsanordnung, wobei einem Gaswechselventil eine Übertragungsanordnung zugeordnet ist. Hierdurch ist es möglich, jedes einzelne Gaswechselventil unabhängig von den anderen Gaswechselventilen anzusteuern. Eine besonders kompakte und kostengünstige Ausführungsform eines mechanischen Ventiltriebes ergibt sich dann, wenn mindestens zwei in Reihe angeordneten Gaswechselventilen eine Übertragungsanordnung zugeordnet ist.

Nachfolgend wird die Erfindung anhand einer Zeichnung erläutert, hierbei zeigt:
Figur 1 eine perspektivische Ansicht eines mechanischen Ventiltriebs für ein Gaswechselventil,
Figur 2 eine perspektivische Seitenansicht einer erfinderischen Übertragungsanordnung des mechanischen Ventiltriebs aus Figur 1, und
Figur 3 eine perspektivische Explosivansicht einer alternativen Ausführungsform eines Stellorgans der Übertragungsanordnung.

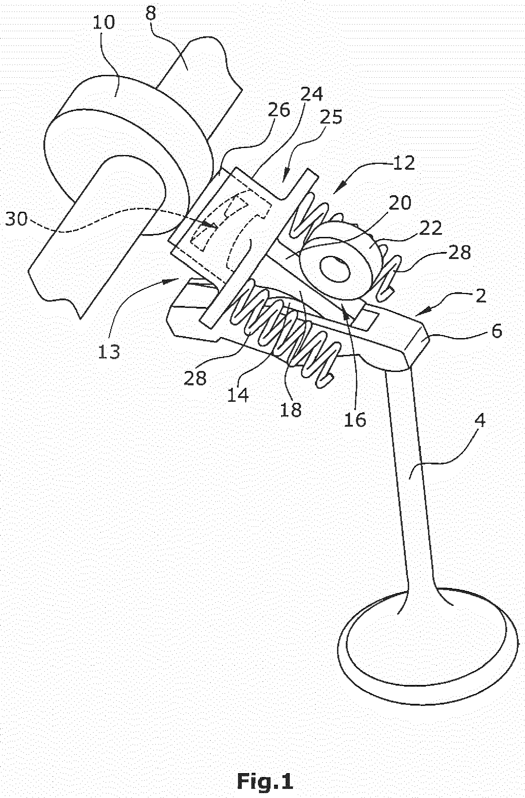

Figur 1 zeigt eine perspektivische Ansicht eines mechanisch steuerbaren Ventiltriebs 2. Auf bekannte Weise ist ein Gaswechselventil 4, das sowohl als Gaseinlass, als auch als Gasauslassventil ausgebildet sein kann, mit einem Schlepphebel 6 verbunden. Des Weiteren ist eine Nockenwelle 8 vorgesehen, die im vorliegenden Fall über einen Nocken 10 auf eine Übertragungsanordnung 12 einwirkt, die wiederum derart ausgebildet ist, dass sie mit einer Rolle 14 des Schlepphebels in Wirkverbindung steht, derart, dass durch eine Drehung der Nockenwelle 8 eine Hubbewegung des Gaswechselventils 4 ausgelöst wird.

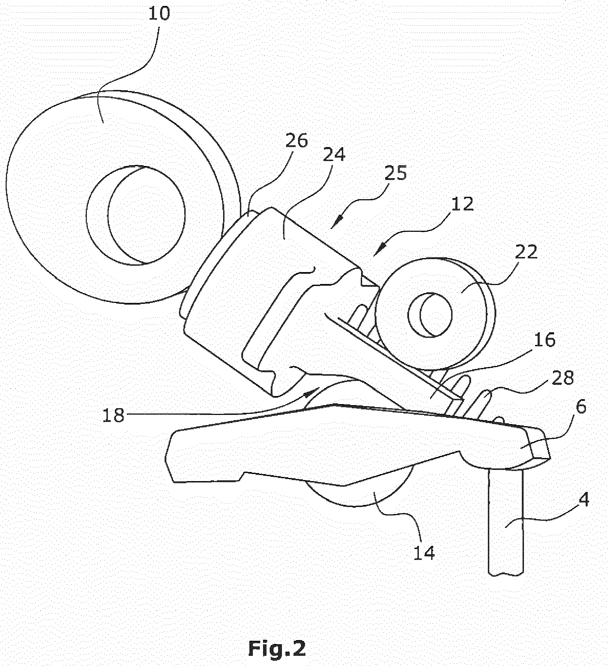

Die Übertragungsanordnung 12 besitzt ein Übertragungsglied 13, dass als Koppelmittel 16 ein Profilstangenelement aufweist, das eine Arbeitskurve 18 besitzt, die auf bekannte Weise mit der Rolle 14 des Schlepphebels 6 in Wirkverbindung steht. Auf der einen der Arbeitskurve 18 gegenüber gelegenen Seite 20 greift ein Stützrollenorgan 22 an, über das die Übertragungsanordnung in einen nicht weiter dargestellten Zylinderkopf gelagert ist. Das Übertragungsglied 12 weist des Weiteren ein Gehäuseteil 24 auf, das als Stellorgan 25 der Ventilhubverstelleinrichtung für das Profilstangenelement 16 ausgebildet ist. Hierzu weist im vorliegenden Ausführungsbeispiel das Gehäuseteil 24 ein in Längsrichtung des Übertragungsgliedes verstellbares Stößelelement 26 (siehe auch Figur 2) auf. Das Gehäuseteil 24 und damit auch das Stößelelement 26 ist im vorliegenden Ausführungsbeispiel durch zwei Federelemente 28 gegenüber der Nockenwelle 8 und damit gegenüber dem Nockenelement 10 vorgespannt. Das Stellorgan 25 ist im vorliegenden Ausführungsbeispiel als hydraulisches Stellorgan ausgebildet.

Figur 2 zeigt in einer Seitenansicht die Übertragungsanordnung 12 aus Figur 1. Deutlich zu erkennen ist hier das Profilstangenelement 16, das mit seiner Arbeitskurve 18 auf die Rolle 14 des Schlepphebels 6 angreift. Das Gehäuseteil 24 ist hier transparent dargestellt, so dass ein nach innen gerichtetes Gewinde 30 erkennbar ist, durch das das Stößelelement 26 geführt ist. Das Stellorgan 25 kann beispielsweise an ein nicht weiter dargestelltes Hockdruck-Ölreservoir angeschlossen sein und dementsprechend derart eingestellt werden, dass Hubverläufe von 0 bis maximal für das Gaswechselventil 4 möglich sind. Andere Antriebsformen für das Stellorgan 25 sind natürlich auch denkbar.

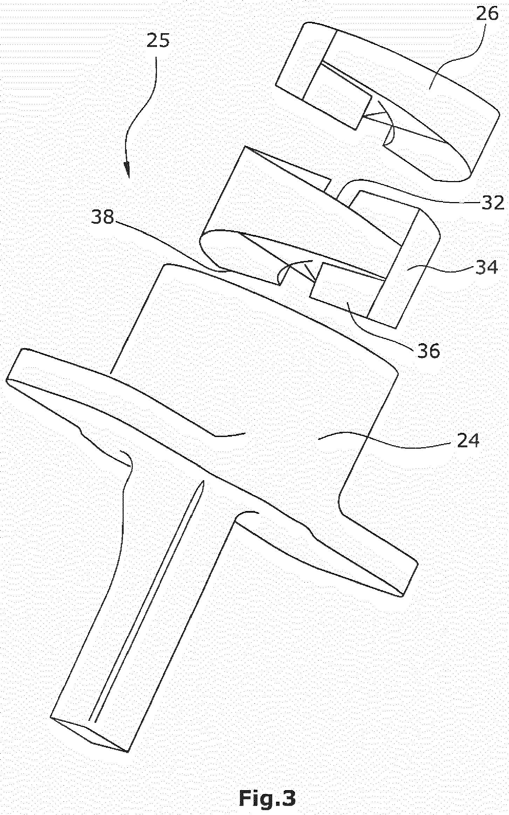

Figur 3 zeigt eine perspektivische Explosivansicht einer weiteren Ausführungsform des Stellorgans 25. Hierbei wird das Stößelelement 26 erfindungsgemäß mechanisch oder hydraulisch auf einer Rampe 32 geführt. Die Rampe 32 ist auf einem Zwischenelement 34 ausgebildet, dass mit Ansatzstücken 36, 38 formschlüssig im Gehäuseteil 24 auf bekannte Weise gelagert ist. Die Rampe 32 kann natürlich auch direkt im Gehäuseteil 24 vorgesehen sein.

## Patentansprüche

1. Übertragungsanordnung für einen mechanisch steuerbaren Ventiltrieb (2), die ein Übertragungsglied (13) aufweist, das derart ausgeführt ist, dass es direkt oder indirekt über Koppelmittel (6. 14, 16, 18) mit zumindest einem Schlepphebel (6) eines Gaswechselventils (4) in Wirkverbindung steht und das im Zylinderkopf mittels Lagermittel (22) beweglich gelagert ist, wobei das Übertragungsglied (13) des Weiteren mit einer Nockenwelle (8) und einer Ventilhubverstelleinrichtung (25) in Wirkverbindung steht, derart, dass zumindest verschiedene Maximalhübe des Gaswechselventils (4) einstellbar sind, wobei das Übertragungsglied (13) als Koppelmittel ein Profilstangenelement (16) mit einer Arbeitskurve (18) aufweist, wobei das Übertragungsglied (13) mit einem in Längsrichtung des Übertragungsgliedes (13) verstellbaren Stößelelement (26) in Wirkverbindung steht, wobei das Stößelelement (26) durch mindestens ein Federelement (28) gegenüber der Nockenwelle (8) vorgespannt ist und wobei das Stößelelement (26) gewindegeführt ist, **dadurch gekennzeichnet, dass** das Stößelelement (26) als Drehstößel ausgebildet ist, wobei das Übertragungsglied (13) als Stellorgan (25) der Ventihubverstelleinrichtung mit einem Gehäuseteil (24) für das Profilstangenelement (16) ausgebildet ist, wobei das Stößelelement (26) in dem Gehäuseteil (24) des Stellorgans (25) gewindegeführt ist.

2. Übertragungsanordnung nach Anspruch 1, **dadurch gekennzeichnet, dass** als Lagermittel ein Stützrollenorgan (22) vorgesehen ist, das auf die der Arbeitskurve (18) gegenüber gelegenen Seite (20) des Profilstangenelementes (16) angreift.

3. Übertragungsanordnung nach Anspruch 1 oder 2, **dadurch gekennzeichnet, dass** das Stellorgan (25) als hydraulisches Stellorgan ausgebildet ist.

4. Mechanisch steuerbarer Ventiltrieb mit einer Übertragungsanordnung nach einem der vorhergehenden Ansprüche, **dadurch gekennzeichnet, dass** einem Gaswechselventil (4) eine Übertragungsanordnung (12) zugeordnet ist.

5. Mechanisch steuerbarer Ventiltrieb mit einer Übertragungsanordnung nach -Anspruch 4, **dadurch gekennzeichnet, dass** mindestens zwei in Reihe angeordneten Gaswechselventilen (4) eine Übertragungsanordnung (12) zugeordnet ist.

## Claims

1. Transfer assembly for a mechanically controllable valve drive (2), the transfer assembly comprising a transfer member (13), the transfer member being configured such that it is operatively connected to at least one drag lever (6) of a gas exchange valve (4) directly or indirectly via coupling means (6, 14, 16, 18) and is movably supported in a cylinder head via bearing means (22), wherein the transfer member (13) is operatively connected to a camshaft (8) and to a valve lift adjusting device (25) such that at least different maximum lifts of the gas exchange valve (4) can be set, wherein the transfer member (13) as a coupling element is provided as a profile rod element (16) comprising a working curve (18), wherein the transfer member (13) is operatively connected to a plunger element (26) adjustable in the longitudinal direction of the transfer member (13), wherein the plunger element (26) is biased by at least one spring element (28) with respect to the camshaft (8), and wherein the plunger element (26) is thread-guided, **characterized in that** the plunger element (26) is designed as a rotary plunger, wherein the transfer member (13) is provided as an actuator (25) of the valve lift adjusting device (25) comprising a housing portion (24) for the profile rod element (16), wherein the plunger element (26) is thread-guided in the housing portion (24) of the actuator (25).

2. Transfer assembly of claim 1, **characterized in that** a supporting roller member (22) is provided as the bearing means, which is configured to engage a side (20) of the profile rod element (18) arranged opposite to the working curve (18).

3. Transfer assembly of claim 1 or 2, wherein the actuator (25) is a hydraulic actuator.

4. Mechanically controllable valve drive comprising a transfer assembly of one of the preceding claims, **characterized in that** one gas exchange valve (4) is associated with one transfer assembly (12).

5. Mechanically controllable valve train comprising a transfer assembly claim 4, **characterized in that** at least two in-line gas exchange valves (4) are associated with one transfer assembly (12).

## Revendications

1. Système de transmission pour une commande de soupape (2) pouvant être commandée mécaniquement, avec un élément de transmission (13) réalisé d'une façon telle qu'il est, directement ou indirectement, en liaison fonctionnelle avec au moins un culbuteur (6) d'une soupape d'échange des gaz (4) par des moyens de couplage (6, 14, 16, 18) et qui est supporté de manière mobile dans un tête de cylindre par des moyens de support (22), ledit élément de transmission (13) étant, en outre, en liaison fonctionnelle avec un arbre à cames (8) et un moyen d'ajustement de la levée de soupape (25) de sorte qu'il est possible d'ajuster au moins des levées maximales différentes de la soupape d'échange des gaz (4), ledit élément de transmission (13) comprenant comme moyen de couplage un élément de tige profilée (16) avec une courbe de travail (18), ledit élément de transmission (13) étant en liaison fonctionnelle avec un élément poussoir (26) ajustable selon la direction longitudinale dudit élément de transmission (13), ledit élément poussoir (26) étant précontraint per rapport à l'arbre à cames (8) par au moins un élément ressort (28), et ledit élément poussoir (26) étant guidé par filetage, **caractérisé en ce que** ledit élément poussoir (26) est réalisé sous forme d'un poussoir rotatif, ledit élément de transmission (13) étant réalisé sous forme d'un actionneur (25) dudit moyen d'ajustement de la levée de soupape avec une partie de carter (24) pour ledit élément de tige profilée (16), ledit élément poussoir (26) étant guidé par filetage dans la partie de carter (24) dudit actionneur (25).

2. Système de transmission selon la revendication 1, **caractérisé en ce qu'**un élément rouleau de support (22) est prévu comme moyen de support, ledit élément engageant le côté (20) dudit élément de tige profilée (16), opposé à la courbe de travail (18).

3. Système de transmission selon la revendication 1 ou 2, **caractérisé en ce que** l'actionneur (25) est réalisé sous forme d'un actionneur hydraulique.

4. Commande de soupape pouvant être commandée mécaniquement, avec un système de transmission selon l'une quelconque des revendications précédentes, **caractérisé en ce qu'**un système de transmission (12) est associé à une soupape d'échange des gaz (4).

5. Commande de soupape pouvant être commandée mécaniquement, avec un système de transmission selon l'une quelconque des revendications précédentes, **caractérisé en ce qu'**un système de transmission (12) est associé à au moins deux soupapes d'échange des gaz (4) disposées en ligne.
